# FASCICULE DE BREVET EUROPEEN

(11) **EP 0 373 246 B1**
(45) Date de publication et mention de la délivrance du brevet: **21.04.1993**
(21) Numéro de dépôt: 88120981.1
(22) Date de dépôt: 15.12.1988
(51) Int. Cl.: A23G 9/28, A23G 9/30, A23G 9/14, A23G 9/04

(54) **Dispositif de formage de confiserie glacée**
Formmaschine für Speiseeis
Shaping apparatus for frozen confectionary

(43) Date de publication de la demande: 20.06.1990
(73) Titulaire: FRISCO-FINDUS AG, CH-9400 Rorschach (CH)
(72) Inventeur: Daouse, Alain, F-60430 Noailles (FR); Delande, Bruno, F-60690 Marseille en Beauvaisis (FR)

(56) Documents cités:
- DE-A- 3 133 705
- DE-A- 3 213 488
- FR-A- 2 261 181
- FR-A- 2 298 277
- GB-A- 875 518
- GB-A- 2 172 541
- US-A- 3 737 328
- US-A- 4 053 012
- US-A- 4 075 868
- US-A- 4 506 988
- US-A- 4 740 088

## Description

L'invention concerne un dispositif de formage en continu de confiserie en morceaux individuels de forme régulière à partir d'un boudin de produit pâteux.

On connaît différentes manières de former de la confiserie glacée en morceaux de forme généralement arrondie des dimensions d'une bouchée.

L'installation selon le brevet USA 4.530.214, par exemple, comporte une chaîne sans fin d'éléments portant des moules à alvéoles que l'on remplit de crème glacée. La chaîne traverse un tunnel de congélation puis à la sortie du tunnel, les moules sont réchauffés, puis basculent à l'aide d'une came en forme de rail en pivotant autour d'une charnière sur l'élément et les morceaux sont démoulés par insufflation d'air par le fond des alvéoles. Une telle installation permet la fabrication de bonbons glacés à haute cadence mais elle présente des inconvénients. Les moules en acier inoxydable représentent un investissement important et si l'on veut modifier la forme des articles, il faut changer tout le jeu de moules. Ils se détériorent rapidement à cause des contraintes mécaniques et thermiques qu'ils subissent. Enfin, ils sont difficiles à nettoyer si bien que l'installation présente des risques du point de vue sanitaire.

Dans une autre installation, par exemple décrite dans le brevet US-A 4.674.968, des boules de crème glacée sont fabriquées en remplissant un moule sphérique dont l'hémisphère inférieur s'ouvre par pivotement en deux parties, cependant qu'un arc râcleur vient détacher la boule de l'hémisphère supérieur. Le réglage d'une telle installation pour obtenir des morceaux de forme constante est très délicat. De plus la cadence de fabrication est nécessairement limitée.

Il existe des dispositifs de formage à haute cadence de boulettes de viande ou de pomme de terre mettant en oeuvre des diaphragmes. Le problème avec ces dispositifs connus est qu'ils sont inadaptés à la confiserie glacée.

Les moyens de commande sont proches de l'alimentation en produit pâteux, ce qui induit des influences thermiques incompatibles avec l'obtention de morceaux de forme régulière.

Le frottement des diaphragmes sur la confiserie glacée produit son échauffement et génère des gouttes qui tombent sur le support, ce qui est incompatible avec une production sans risques sanitaires.

Enfin, lorsqu'il y a plusieurs diaphragmes couplés, la construction est telle que les diaphragmes sont soumis à des accélérations différentes en ouverture et en fermeture. Cela implique pour la confiserie glacée aérée qui a un caractère compressible, une variabilité des formes indésirable en alimentation continue à pression constante. Un tel problème ne se pose pas dans le cas des boulettes de viande ou de pomme de terre relativement incompressibles.

La demande de brevet publiée GB 2.171.541, concerne un dispositif de formage de confiserie glacée sur un support, comprenant une tête de formage alimentée en produit pâteux, un organe distributeur de boudin de produit pâteux, un diaphragme de sectionnement du boudin et des moyens de commande synchronisée de l'organe distributeur et du diaphragme, de manière à produire des morceaux individuels de forme sphérique à partir du boudin. Selon cette demande de brevet, le problème de la compressibilité de la confiserie glacée est résolu en couplant le mouvement rotatif de va-et-vient du diaphragme à un variateur de pression à l'intérieur de la chambre de formage. Un tel dispositif ne permet qu'une cadence de fabrication limitée. De plus il ne prête pas attention aux problèmes sanitaires associés à la formation de gouttes.

Le dispositif selon l'invention permet de pallier les inconvénients des dispositifs connus.

Il est caractérisé par le fait
que l'alimentation en produit pâteux est continue à pression constante,
que les moyens de sectionnement sont munis d'éléments pour recueillir les gouttes produites par l'échauffement du boudin au contact des moyens de sectionnement,
que les éléments pour recueillir les gouttes sont, sur la face de la pièce actionneuse opposée aux couteaux dans sa partie médiane, une rainure circulaire facilitant la chute des gouttes en évitant leur dispersion sur toute la pièce et dans sa partie centrale un contre cône de dispersion des gouttes vers la rainure,
que le dispositif est muni de moyens pour évacuer les gouttes sans qu'elles n'entrent en contact avec le support et que les moyens pour évacuer les gouttes comportent une gouttière disposée entre la tête de formage et le support et un manchon de forme sensiblement tronconique disposé en regard de la conduite de sortie des morceaux juste en dessous des moyens de sectionnement.

L'invention concerne également une installation de fabrication en continu de produits de confiserie glacée, caractérisée par le fait qu'elle comporte le dispositif de formage selon l'invention, un tunnel de refroidissement des morceaux et un dispositif d'enrobage des morceaux.

Les dessins annexés illustrent à titre d'exemple un mode de réalisation particulier de l'invention. Dans ces dessins, les mêmes chiffres de référence désignent les mêmes éléments.
La figure 1 est une représentation schématique partielle d'une installation de fabrication des confiseries glacées,
la figure 2 est une vue en perspective éclatée d'une tête de formage avec l'un des moyens de sectionnement,
la figure 3 est une vue de détail de dessous et en perspective de la pièce actionneuse de diaphragme,
la figure 4 est une représentation schématique du fonctionnement de l'organe de distribution (4a, 4b),
la figure 5 est une vue en perspective des moyens de commande synchronisée,
la figure 6 est une vue en perspective des moyens d'évacuation des gouttes et
la figure 7 est une vue éclatée du capot isotherme de la tête.

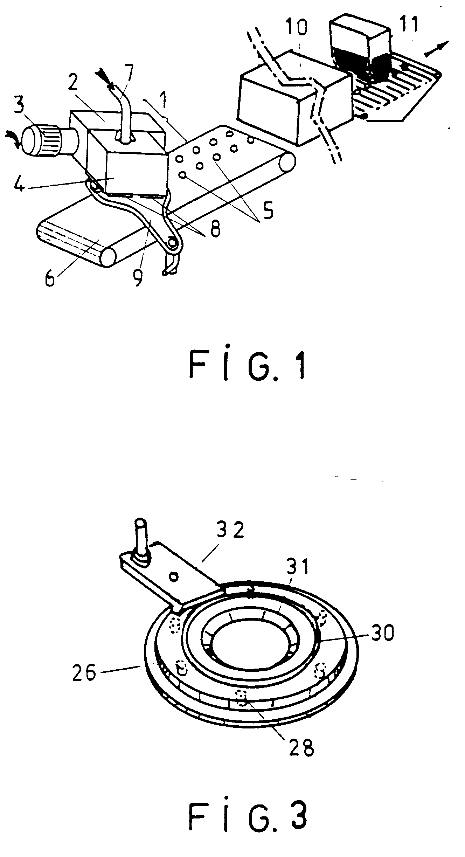

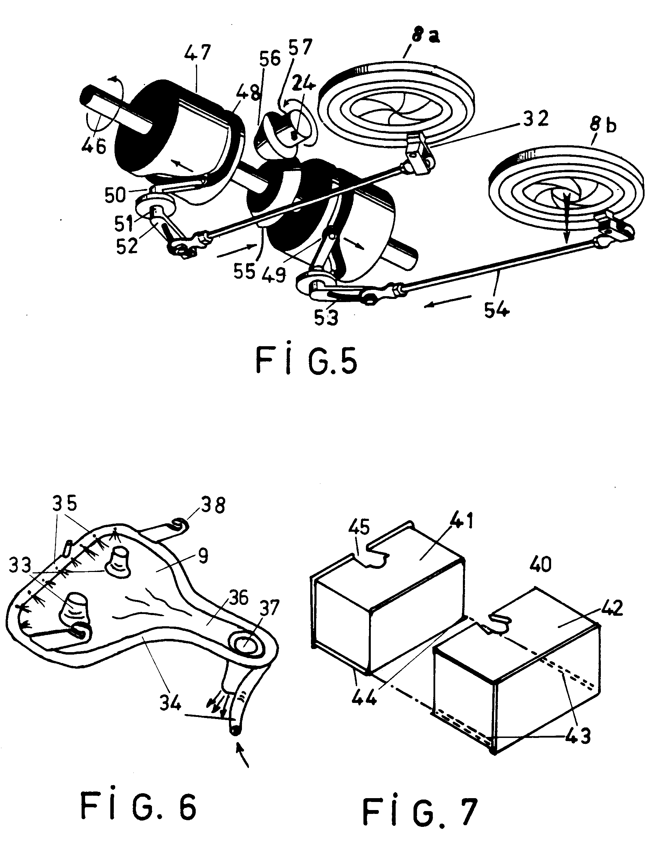

A la figure 1, le dispositif de formage 1 comprend un carter 2 contenant les moyens de commande représentés en détail à la figure 5 ci-après, un moteur d'entraînement 3 des dits moyens, une tête de formage 4 qui délivre des morceaux 5 sur le tapis transporteur 6. La tête de formage est alimentée en boudin pâteux de confiserie glacée, par la conduite 7 et le boudin est divisé en morceaux par les moyens de sectionnement 8. Une gouttière 9 recueille les gouttes produites par l'échauffement de la confiserie glacée lors du sectionnement. Les morceaux sont dirigés vers un tunnel de refroidissement 10, puis enrobés en 11.

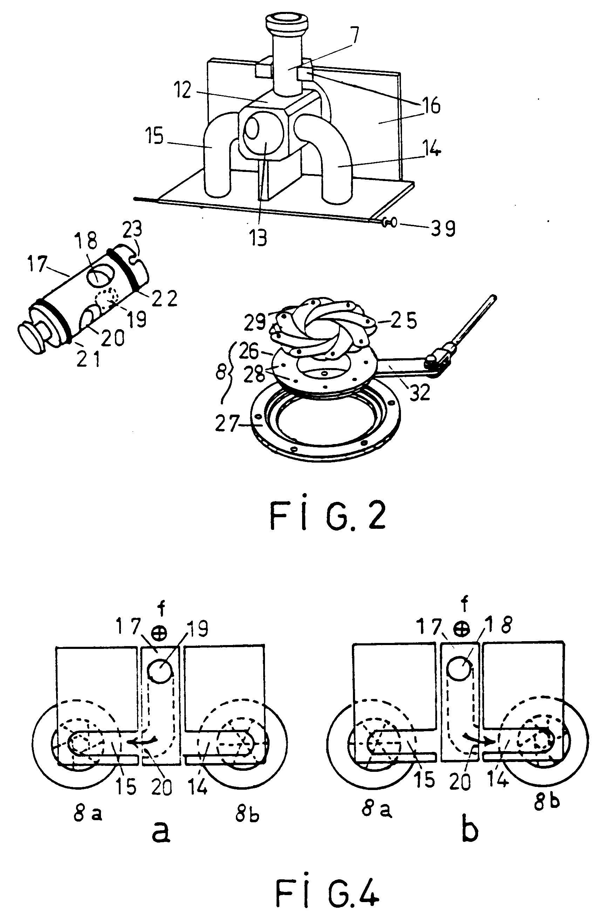

La tête de formage de la figure 2 comprend une conduite d'amenée de confiserie glacée 7 débouchant dans un corps 12 évidé pour former une chambre cylindrique 13 par le dessus et vers l'arrière de ladite chambre. De chaque côté de la chambre 13 et vers l'avant, des ouvertures sont ménagées vers les conduites de sorties 14 et 15. Le corps et les conduites sont maintenus par un bâti 16. L'organe distributeur du boudin pâteux est un boisseau cylindrique mono-bloc 17 adapté à la chambre 13. Le boisseau possède, dans sa partie postérieure, des orifices 18 et 19 diamétralement opposés et pouvant communiquer avec la conduite 7. Dans sa partie antérieure, le boisseau est troué en 20 et peut communiquer avec les conduites 14 et 15 ainsi qu'il sera expliqué plus en détail ci-après en liaison avec la figure 4. Les perçages sont usinés de préférence avec arrondis, sans angles de raccordement. L'étanchéité en mouvement est assurée par les joints toriques 21 et 22 qui sont respectivement en deçà de la conduite 7 et au-delà des conduites 14 et 15. Le boisseau est fermé à ses deux extrémités. Une échancrure 23 ménagée dans la partie postérieure du boisseau vient en prise avec la cheville 24 sur l'arbre d'entraînement du boisseau ainsi qu'il sera expliqué ci-après en liaison avec la figure 5.

Les moyens de sectionnement sont des diaphragmes 8 constitués d'un ensemble de couteaux 25, d'une pièce actionneuse 26 et d'une bague de guidage et de fixation 27 sur le bâti 16. La pièce actionneuse 26 est pourvue, sur sa face en regard des couteaux 25, à la périphérie et dans son épaisseur, de trous 28 servant de logement pour des tenons 29 correspondants sur les couteaux.

Comme montré à la figure 3, une rainure annulaire 30 est creusée dans la partie médiane de la face de la pièce 26 opposée aux couteaux. La partie centrale de la pièce 26 est évidée en forme de contre cône 31 dont la pente est accentuée, par exemple environ 60°. Lorsque le diaphragme travaille à haute cadence, l'échauffement de la confiserie glacée dû aux frottements des couteaux produit des gouttes qui sont dispersées par le contre cône 31 vers la rainure 30. On réalise ainsi un contrôle de leurs points de chute. La pièce 26 porte un bras 32 commandant le diaphragme ainsi qu'il sera expliqué ci-après en liaison avec la figure 5.

Le corps 12 et le bâti 16 de la tête de formage, les conduites 7, 14 et 15, les couteaux 25 et la pièce actionneuse 26 sont avantageusement en acier inoxydable, facilement nettoyables. Le boisseau 17 et la bague de guidage 27 sont avantageusement en matière plastique, de préférence en polyester thermoplastique par exemple en polyéthylène téréphtalate ayant une bonne résistance au fluage et un coefficient de frottement faible et constant, assurant un particulier un bon glissement avec l'acier inoxydable.

De préférence, les tolérances de fabrication des pièces 17 et 27 sont réduites de manière à assurer un bon guidage et une étanchéité optimale entre les pièces en mouvement.

A la figure 6, les moyens d'évacuation des gouttes sont constitués par une gouttière 9, par exemple en acier inoxydable, disposée entre la tête de formage (4, fig. 1) et le support (6, fig. 1). La gouttière est trouée par des manchons 33 de forme sensiblement tronconique disposés en face des conduites de sortie 14, 15, juste sous les diaphragmes 8. Une rampe 34 d'aspersion d'eau par jets plats 35 est placée sur le pourtour de la gouttière et facilite l'évacuation des gouttes accumulées dans la rainure 30 qui tombent à l'extérieur du manchon 33, et sont entraînées par l'eau dans la rigole pentue 36, puis par le tuyau 37. Les morceaux (5. fig. 1) tombent à travers le manchon 33 sans le toucher sur le tapis transporteur. La gouttière est amovible et ne présente pas d'arêtes vives de sorte qu'elle est facilement nettoyable. Sa distance au tapis transporteur est de préférence légèrement supérieure à la hauteur d'un morceau. Elle est suspendue par les crochets 38 à une tige 39 du bâti 16 (Fig. 2).

Les conduites d'alimentation et de sortie, le corps et le boisseau de la tête de formage sont à l'intérieur d'un capot isotherme représenté à la figure 7. Ce capot permet d'isoler les pièces en contact avec la crème glacée des moyens de commande des diaphragmes et du boisseau ainsi que de l'ambiance environnante. On évite de la sorte des variations de forme des morceaux qui pourraient être provoquées par des influences thermiques extérieures, par exemple un courant d'air ou un échauffement dû au moteur. Le capot 40 est composé de deux parois superposées, la paroi intérieure 41 en matériau conducteur thermique, par exemple en alliage léger et la paroi extérieure 42 en matériau isolant thermique, par exemple en polycarbonate transparent. Un matelas d'air sépare les deux parois. Avantageusement, la paroi extérieure 42 est munie sur ses petites faces latérales intérieures de glissières 43 dans lesquelles s'insèrent des rails correspondants 44 sur les faces latérales extérieures correspondantes de la paroi intérieure 41. Le système de verrouillage du capot ne requiert pas de vis ou de pièces mobiles adaptées. La forme de l'échancrure 45 adaptée au bâti 16 permet d'éviter un glissement du capot.

Le fonctionnement du dispositif est représenté aux figures 4 et 5. A la figure 5, l'arbre 46 est entraîné en rotation continue par le moteur (3, fig. 1), de préférence muni d'un variateur. Cet arbre porte à chaque extrémité une came 47 dans la rainure 48 de laquelle roule un galet 49 porté par un bras 50. Ce bras pivote autour d'un axe fixe 51 et est solidaire d'une manivelle 52 munie d'une rainure en arc 53 permettant le réglage du bras de levier. La manivelle 52 est reliée à une biellette 54 elle-même montée pivotante sur le bras 32 de la pièce actionneuse de diaphragme (26, fig. 3). Le réglage de l'ensemble des pièces est tel que, lorsque le diaphragme 8b est entièrement ouvert, le diaphragme 8a est fermé. L'arbre 46 porte un engrenage 55 qui prend sur un engrenage 56 monté sur l'arbre 57, perpendiculaire à l'arbre 46. Les engrenages 55 et 56 constituent donc un renvoi d'angle à 90° pour l'arbre 57. Ce dernier arbre est muni d'une cheville 24 en prise avec l'échancrure (23, fig. 2) pour entraîner en rotation le boisseau 17 comme indiqué précédemment. La position de la figure 5 correspond à la position b de la figure 4 dans laquelle le boisseau 17 communique par l'ouverture 18 avec la conduite d'amenée 7 (flèche f) et par l'ouverture 20 avec la conduite de sortie 14. Lorsque le boisseau 17 a effectué un demi-tour, il communique par l'ouverture 19 avec la conduite d'amenée 7 et par l'ouverture 20 avec la conduite de sortie 15. Le diaphragme 8a est alors entièrement ouvert alors que le diaphragme 8b est fermé. Les différentes flèches à la figure 5 indiquent le sens des mouvements des pièces et leur corrélation. On voit donc que l'ouverture et la fermeture alternative des diaphragmes permet une alimentation continue avec débit constant de produit.

Les deux diaphragmes 8a et 8b ont leur axe parallèle à l'axe de pivotement 51 correspondant des manivelles 52 et l'entraxe des diaphragmes est identique à l'entraxe des manivelles. Les biellettes 54 des deux diaphragmes ont la même longueur. Le rayon de courbure des rainures 53 ménagées dans les manivelles 52 correspond à la longueur des biellettes. Les positions angulaires (ouverture-fermeture) des pièces actionneuses de diaphragme 26 sont identiques sur les deux diaphragmes, ce qui assure les mêmes accélérations à l'ouverture et à la fermeture et garantit ainsi des formes rigoureusement identiques pour les morceaux provenant des diaphragmes.

Le réglage du diamètre des morceaux peut être effectué sans modifier la longueur des biellettes 54 du fait que le rayon de courbure des rainures 53 correspond à cette longueur. Ceci évite la détérioration des couteaux en position fermée, puisque si ce n'était pas le cas, le réglage des positions angulaires du bras 32 qui détermine le degré d'ouverture du diaphragme, s'il n'était pas accompagné d'un ajustement de la longueur de la biellette, entraînerait un chevauchement excessif des couteaux 25 provoquant leur détérioration.

Dans le mode de réalisation représenté, les morceaux sont de forme quasi-sphérique de diamètre 20 à 30 mm et de poids 7,5 g environ. On peut naturellement changer la forme des morceaux, par exemple produire des articles quasi-cylindriques, ovoïdes, coniques ou hémisphériques par exemple en modifiant le tracé des rainures 48 des cames 47, ce qui modifie le rythme d'ouverture et de fermeture des diaphragmes. Par une modification du nombre des couteaux on peut obtenir des articles de section hexagonale (6 couteaux comme aux figures 4 et 5) ou octogonale (8 couteaux comme à la figure 2). On peut aussi orienter les lames des diaphragmes, par exemple de sorte qu'une face des polygones soit parallèle à la direction de déplacement du tapis transporteur, ce qui peut faciliter la prise des articles par des pinces lors du conditionnement. En agissant sur la courbure du tranchant des lames, on peut modifier l'arrondi des morceaux. on peut également prévoir que les lames de diaphragme glissent les unes par rapport aux autres sans se chevaucher. Les couteaux peuvent être entaillés de manière à produire des effets décoratifs de surface.

Dans le mode de réalisation représenté, la tête de formage comprend deux diaphragmes. On peut concevoir d'augmenter le nombre des diaphragmes et par suite de prévoir un nombre correspondant de pièces de commande conduites par un nombre correspondant de cames.

Par souci de clarté de la représentation, la conduite d'amenée est simple. On peut la remplacer par une conduite comportant des parois de séparation, voire une conduite coaxiale de diamètre inférieur de manière à réaliser des articles bi- ou multi-parfum par coextrusion.

Par confiserie glacée selon l'invention, on entend de la crème glacée ou un sorbet aérés extrudables par exemple à la température de - 5 à - 7°C et foisonnés par exemple à enrivon 70% en volume. La confiserie glacée peut contenir des morceaux, par exemple de fruits confits ou secs, de truffe etc...

La composition d'enrobage peut être une composition grasse, par exemple une couverture de chocolat ou aromatisée aux fruits dans le cas de la crème glacée. Pour un sorbet, ce peut être une solution aqueuse, par exemple un sirop. La composition d'enrobage peut contenir des particules ou granulés décoratifs, par exemple de caséine extrudée, de sucre etc...

Le dispositif selon l'invention dans son mode de réalisation représenté permet de fabriquer environ 20.000 bonbons quasi-sphériques de crème glacée de poids environ 7,5 g à l'heure lorsque le moteur tourne à 200 tours/min., c'est-à-dire à très haute cadence, tout en obtenant des bonbons glacés de forme régulière dans de bonnes conditions sanitaires.

## Revendications

1. Dispositif de formage en continu de confiserie glacée sur un support (6), comprenant un support (6), une tête de formage (4) alimentée en produit pâteux, un organe distributeur de boudin de produit pâteux, des moyens de sectionnement (8) du boudin et des moyens de commande synchronisée de l'organe distributeur et des moyens de sectionnement (8), de manière à produire des morceaux (5) individuels de forme régulière à partir du boudin, les moyens de sectionnement (8) étant constitués d'un ensemble de couteaux (25), d'une pièce actionneuse (26) des couteaux et d'une bague de guidage (27) des couteaux, caractérisé par le fait
que l'alimentation en produit pâteux est continue à pression constante,
que les moyens de sectionnement (8) sont munis d'éléments pour recueillir les gouttes produites par l'échauffement du boudin au contact des moyens de sectionnement (8),
que les éléments pour recueillir les gouttes sont, sur la face de la pièce actionneuse (26) opposée aux couteaux (25) dans sa partie médiane, une rainure (30) circulaire facilitant la chute des gouttes en évitant leur dispersion sur toute la pièce et dans sa partie centrale un contre cône (31) de dispersion des gouttes vers la rainure,
que le dispositif est muni de moyens pour évacuer les gouttes sans qu'elles n'entrent en contact avec le support et que les moyens pour évacuer les gouttes comportent une gouttière (9)disposée entre la tête de formage et le support et un manchon (33) de forme sensiblement tronconique disposé en regard de la conduite de sortie des morceaux (5) juste en dessous des moyens de sectionnement (8).

2. Dispositif selon la revendication 1, caractérisé par le fait que la tête de formage comprend une conduite d'amenée (7) et deux conduites (14,15) de sortie, que l'organe distributeur est un boisseau rotatif (17) tournant toujours dans le même sens et délivrant alternativement le produit pâteux vers l'une ou l'autre conduite de sortie et que les moyens de sectionnement des boudins sont des diaphragmes (8) à couteaux (25) qui s'ouvrent et se referment en synchronisme avec le boisseau (17).

3. Dispositif selon la revendication 2, caractérisé par le fait que les moyens de commande synchronisée du boisseau (17) et des diaphragmes (8) sont constitués par un premier arbre (46) entraîné en rotation continue par un moteur (3) et portant à chaque extrémité une came rainurée (47) dans la rainure (48) de laquelle roule un galet (49) porté par un bras (50) pivotant relié par une manivelle (52) de commande à une biellette (54),
laquelle biellette (54) est montée pivotante sur un bras (32) d'une pièce actionneuse (26) des couteaux (25) du diaphragme et par un second arbre (57) perpendiculaire au premier (46) et engrenant par renvoi d'angle (55,56) sur ce dernier, lequel second arbre entraîne le boisseau (17).

4. Dispositif selon la revendication 2, caractérisé par le fait que la tête de formage et le boisseau (17) comportent des passages arrondis sans angles de raccordement et sont par suite facilement nettoyables.

5. Dispositif selon la revendication 3, caractérisé par le fait que les axes (51) de pivotement des manivelles sont parallèles aux axes des diaphragmes (8a,8b), que l'entraxe des diaphragmes est identique à l'entraxe des manivelles, que les biellettes (54) sont d'égale longueur, et que les positions angulaires d'ouverture et de fermeture des pièces actionneuses de diaphragmes sont identiques, ce qui garantit des accélérations identiques en ouveture et en fermeture des diaphragmes.

6. Dispositif selon la revendication 1, caractérisé par le fait que la gouttière (9) est amovible et ne présente pas d'arêtes vives, de manière à être facilement nettoyable et qu'elle comporte une rigole (36) d'évacuation de l'eau dans sa partie adjacente au support.

7. Dispositif selon la revendication 1, caractérisé par le fait que la gouttière (9) est placée au dessus du support (6) à une hauteur de celui-ci légèrement supérieure à la hauteur des morceaux (5).

8. Dispositif selon la revendication 1, caractérisé par le fait que la conduite d'alimentation (7) comporte une conduite intérieure coaxiale pour délivrer un boudin de confiserie glacée co-extrudé.

9. Dispositif selon la revendication 1, caractérisé par le fait que les conduites d'alimentation et de sortie ainsi que l'organe distributeur sont groupés dans un capot isotherme (40) qui les sépare des moyens de commande de l'organe distributeur et des moyens de sectionnement du boudin.

10. Dispositif selon la revendication 9, caractérisé par le fait que le capot est à double paroi, la paroi intérieure (41) en matériau conducteur thermique et la paroi extérieure (42) en matériau isolant thermique et que les parois sont séparées par un matelas d'air.

11. Installation de fabrication en continu de produits de confiserie glacée, caractérisée par le fait qu'elle comporte un dispositif de formage selon l'une des revendications 1 à 10, un tunnel de refroidissement des morceaux et un dispositif d'enrobage des morceaux.

## Claims

1. A device for continuously shaping ice-cream confectionery on a support (6), comprising a support (6), a shaping head (4) supplied with paste-form product, a distributor for the strand of paste-form product, means (8) for cutting the strand and synchronized control means for the distributor and the cutting means (8) so that individual portions (5) of uniform shape are produced from the strand, the cutting means (8) being formed by an assembly of blades (25), an actuator (26) for the blades and a guide ring (27) for the blades, characterized in that the supply of paste-form product takes place continuously under constant pressure, in that the cutting means (8) are provided with elements for collecting the drops produced by the heating of the strand on contact with the cutting means (8), in that the elements for collecting the drops are formed - on that surface of the actuator (26) facing the blades (25) in its middle part - by a circular groove (30) facilitating the fall of the drops and preventing their dispersion over the entire actuator and - in its central part - by a counter cone (31) which disperses the drops towards the groove, in that the device comprises means for removing the drops so that they do not come into contact with the support and in that the means for removing the drops comprise a trough (9) arranged between the shaping head and the support and a substantially frustoconical sleeve (33) arranged opposite the outlet pipe for the portions (5) just below the cutting means (8).

2. A device as claimed in claim 1, characterized in that the shaping head comprises a feed pipe (7) and two outlet pipes (1,15), in that the distributor is a rotary plug (17) which always rotates in the same direction and delivers the paste-form product alternately to one or the other outlet pipe and in that the means for cutting the strands are blade diaphragms (25;8) which open and close in synchronism with the plug (17).

3. A device as claimed in claim 2, characterized in that the synchronized control means for the plug (17) and the diaphragms (8) are formed by a first shaft (46) continuously rotated by a motor (3) and bearing at each end a grooved cam (47) in the groove (48) of which runs a roller (49) supported by a pivoting arm (50) connected by a control crank (52) to a link rod (54) pivotally mounted on an arm (32) of an actuator (26) for the blades (25) of the diaphragm and by a second shaft (57) perpendicular to the first shaft (46) and engaging therewith through a bevel gear (55,56), the second shaft driving the plug (17).

4. A device as claimed in claim 2, characterized in that the shaping head and the plug (17) comprise rounded orifices with no connecting angles and are thus easy to clean.

5. A device as claimed in claim 3, characterized in that the pivot axes (51) of the cranks are parallel to the axes of the diaphragms (8a, 8b), in that the distance between the axes of the diaphragms is identical with the distance between the axes of the cranks, in that the link rods (54) are equal in length and in that the angular opening and closing positions of the diaphragm actuators are identical which guarantees identical accelerations during the opening and closing of the diaphragms.

6. A device as claimed in claim 1, characterized in the the trough (9) is detachable and has no sharp edges so that it is easy to clean and in that it comprises a channel (36) for the removal of water in its part adjacent the support.

7. A device as claimed in claim 1, characterized in that the trough (9) is arranged above the support (6) at a height thereof slightly greater than the height of the portions (5).

8. A device as claimed in claim 1, characterized in that the feed pipe (7) comprises an inner coaxial pipe for delivering a strand of coextruded ice-cream confectionery.

9. A device as claimed in claim 1, characterized in that the feed and outlet pipes and the distributor are accommodated in an isothermal cover (40) which separates them from the control means of the distributor and the means for cutting the strand.

10. A device as claimed in claim 9, characterized in that the cover is double-walled, the inner wall (41) consisting of a heat-conducting material and the outer wall (42) of a heat-insulating material, and in that the walls are separated by an air space.

11. An installation for the continuous production of ice-cream confectionery products, characterized in that it comprises a shaping head according to any of claims 1 to 10, a tunnel for cooling the portions and a unit for coating the portions.

## Patentansprüche

1. Vorrichtung zum kontinuierlichen Ausformen von Eiskonfekt auf einem Träger (6),
mit einem Träger (6),
mit einem Ausformkopf (4), dem ein teigiges Produkt zugeführt wird,
mit einem Verteilerorgan zur Ausgabe eines Strangs aus einem teigigen Produkt,
mit Trennmitteln (8) zum Zerteilen des Strangs
sowie mit Mitteln für die synchrone Steuerung des Verteilerorgans und der Trennmittel (8) derart, daß aus dem Strang einzelne Stücke (5) mit regelmäßiger Form erzeugt werden, wobei die Trennmittel (8) aus einer Gruppe von Messern (25), einem Betätigungsorgan (26) zur Betätigung der Messer und einem Führungsring (27) zum Führen der Messer bestehen,
**dadurch gekennzeichnet,**
daß die Zuführung des teigigen Produkts kontinuierlich mit konstantem Druck erfolgt,
daß die Trennmittel (8) mit Elementen zur Aufnahme der Tropfen ausgestattet sind, die beim Erwärmen des Strangs durch den Kontakt mit den Trennmitteln (8) erzeugt werden,
daß die Elemente zur Aufnahme der Tropfen aus einer auf der den Messern (25) entgegengesetzten Seite des Betätigungsorgans (26) in dessen mittlerem Bereich angeordneten Nut (30) bestehen, die das Herabfallen der Tropfen erleichtert und ihre Verteilung über das ganze Betätigungsorgan verhindert, sowie aus einem im zentralen Bereich des Betätigungsorgans angeordneten Gegenkonus (31) zum Verteilen der Tropfen in Richtung auf die Nut,
daß die Vorrichtung Mittel aufweist zum Abführen der Tropfen, ohne daß diese mit dem Träger in Kontakt kommen,
und daß die Mittel zum Abführen der Tropfen eine zwischen dem Ausformkopf und dem Träger angeordnete Rinne (9) sowie einen im wesentlichen kegelstumpfförmigen Stutzen (33) umfassen, der gegenüber der Ausgabeleitung für die Produkte und unmittelbar unter den Trennmitteln (8) angeordnet ist.

2. Vorrichtung nach Anspruch 1, dadurch gekennzeichnet, daß der Ausformkopf eine Zuführungsleitung (7) und zwei Ausgabeleitungen (14, 15) besitzt daß das Verteilerorgan eine drehbare Hülse (17) ist, die sich stets in derselben Richtung dreht und das Produkt abwechselnd an die eine oder die andere Ausgabeleitung liefert, und daß die Trennmittel zum Zerteilen des Strangs aus Messerblenden (25, 8) gebildet werden, die sich synchron zur Hülse (17) öffnen und schließen.

3. Vorrichtung nach Anspruch 2, dadurch gekennzeichnet, daß die Mittel für die synchrone Steuerung der Hülse (17) und der Messerblenden (8) aus einer ersten Welle (46) bestehen, die von einem Motor (3) kontinuierlich gedreht wird und an jedem Ende einen genuteten Nocken (47) trägt, in dessen Nut (48) eine Nockenrolle (49) abläuft, die von einem Schwenkarm (50) getragen ist, der über eine Antriebskurbel (52) mit einer Pleuelstange (54) verbunden ist, die gelenkig an einem Arm (32) eines Betätigungsorgans (26) zur Betätigung der Messer (25) der Messerblende montiert ist, sowie aus einer zweiten Welle (57), die rechtwinklig zu der ersten Welle (46) angeordnet ist und über ein Winkelgetriebe (55, 56) mit dieser in Eingriff steht, wobei die zweite Welle die Hülse (17) antreibt.

4. Vorrichtung nach Anspruch 2, dadurch gekennzeichnet, daß der Ausformkopf und die Hülse (17) abgerundete Durchgänge ohne Winkelstücke besitzen und infolgedessen leicht zu reinigen sind.

5. Vorrichtung nach Anspruch 1, dadurch gekennzeichnet, daß die Schwenkachsen (51) der Kurbeln parallel zu den Achsen (8a, 8b) der Messerblenden verlaufen, daß der Achsabstand der Messerblenden gleich dem Achsabstand der Kurbeln ist, daß die Pleuelstangen (54) gleiche Länge haben und daß die Positionen der Öffnungswinkel und der Schließwinkel der Betätigungsorgane der Messerblenden gleich sind, so daß gleiche Beschleunigungen beim Öffnen und Schließen der Messerblenden gewährleistet sind.

6. Vorrichtung nach Anspruch 1, dadurch gekennzeichnet, daß die Rinne (9) abnehmbar ist und keine scharfen Ecken hat, so daß sie leicht gereinigt werden kann, und daß sie in ihrem dem Träger benachbarten Bereich einen Entwässerungsabfluß (36) besitzt

7. Vorrichtung nach Anspruch 1, dadurch gekennzeichnet, daß die Rinne (9) über dem Träger (6) in einer Höhe angeordnet ist, die geringfügig größer ist als die Höhe der Stücke (5).

8. Vorrichtung nach Anspruch 1, dadurch gekennzeichnet, daß die Zuführungsleitung (7) eine koaxiale Innenleitung zur Ausgabe eines mitextrudierten Eiskonfektstrangs aufweist.

9. Vorrichtung nach Anspruch 1, dadurch gekennzeichnet, daß die Zuführungs- und Ausgabeleitungen und das Verteilerorgan in einer Wärmeisolierkappe (40) angeordnet sind, die sie von den Steuerungsmitteln des Verteilerorgans und den Trennmitteln zum Zerteilen des Strangs trennnt.

10. Vorrichtung nach Anspruch 9, dadurch gekennzeichnet, daß die Kappe doppelwandig ist, wobei die innere Wand (41) aus wärmeleitendem Material und die äußere Wand (42) aus wärmeisolierendem Material besteht, und daß die Wände durch ein Luftpolster voneinander getrennt sind.

11. Anlage zum kontinuierlichen Herstellung von Eiskonfektprodukten, dadurch gekennzeichnet, daß sie eine Ausformvorrichtung nach einem der Ansprüche 1 bis 10, einen Tunnel zum Kühlen der Produkte und eine Vorrichtung zum Einwickeln der Produkte umfaßt.
